# EUROPEAN PATENT APPLICATION

(11) **EP 4 727 179 A1**
(43) Date of publication of application: **15.04.2026**
(21) Application number: 24845799.6
(22) Date of filing: 12.06.2024
(51) Int. Cl.: H04W 4/80, H04R 3/00, H04W 76/14, H04M 1/72409, G06F 3/16, H04L 67/1095

(54) **ELECTRONIC DEVICE, METHOD, AND NON-TRANSITORY COMPUTER-READABLE STORAGE MEDIUM FOR CONTROLLING OUTPUT OF AUDIO IN WIRELESS ENVIRONMENT**

(30) Priority: 24.07.2023 KR 20230095921; 31.07.2023 KR 20230099808
(71) Applicant: Samsung Electronics Co., Ltd., Suwon-si, Gyeonggi-do 16677 (KR)
(72) Inventor: JIN, Juyeon, Suwon-si Gyeonggi-do 16677 (KR); MOON, Youngsin, Suwon-si Gyeonggi-do 16677 (KR); CHEONG, Gupil, Suwon-si Gyeonggi-do 16677 (KR)
(74) Representative: HGF
(86) International application number: PCT/KR2024/008061
(87) International publication number: WO 2025/023495

(57) **Abstract**

An electronic device is provided. The electronic device may comprise a communication circuit for Bluetooth low energy (BLE). The electronic device may comprise a speaker. The electronic device may comprise at least one processor. The at least one processor may be configured to receive information on a first periodic advertisement of a second external electronic device from a first external electronic device by means of the communication circuit. The at least one processor may be configured, on the basis of the information, to receive, by means of the communication circuit, at least one first packet advertised from the second external electronic device according to the first periodic advertisement.

## Description

### [Technical Field]

The following descriptions relate to an electronic device, a method, and a non-transitory computer-readable storage medium for controlling output of audio in a wireless environment.

### [Background Art]

Compared to legacy Bluetooth^{®} (or classic Bluetooth), Bluetooth^{®} low energy (BLE) may provide reduced power consumption and may provide at least a similar or often greater communication range between connected devices. BLE may be provided on an industrial, scientific, and medical (ISM) radio band.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device is provided. The electronic device may comprise a communication circuit for Bluetooth low energy (BLE). The electronic device may comprise a speaker. The electronic device may comprise at least one processor. The at least one processor may be configured to receive information for a first periodic advertisement of a second external electronic device, through the communication circuit from a first external electronic device. The at least one processor may be configured to receive, based on the information, at least one first packet advertised from the second external electronic device according to the first periodic advertisement, through the communication circuit. The at least one processor may be configured to, after synchronizing to broadcast isochronous stream (BIS) from the second external electronic device based on the at least one first packet, defer to output audio of the BIS with a reference volume until start of rendering of data for the BIS that is indicated by at least one second packet advertised from the second external electronic device according to a second periodic advertisement of the second external electronic device. The at least one processor may be configured to control the speaker to output the audio with the reference volume based on the rendering of the data received from the second external electronic device.

According to an embodiment, a method is provided. The method may be executed in an electronic device with a communication circuit for Bluetooth low energy (BLE) and a speaker. The method may comprise receiving information for a first periodic advertisement of a second external electronic device, through the communication circuit from a first external electronic device. The method may comprise receiving, based on the information, at least one first packet advertised according to the first periodic advertisement, through the communication circuit. The method may comprise, after synchronizing to broadcast isochronous stream (BIS) from the second external electronic device based on the at least one first packet, deferring to output audio of the BIS with a reference volume until start of rendering of data for the BIS that is indicated by at least one second packet advertised according to a second periodic advertisement of the second external electronic device. The method may comprise, controlling the speaker to output the audio with the reference volume based on the rendering of the data received from the second external electronic device.

According to an embodiment, a non-transitory computer readable storage medium is provided. The non-transitory computer readable storage medium may store one or more programs. The one or more programs may comprise instructions to, when executed by an electronic device with a communication circuit for Bluetooth low energy (BLE) and a speaker, cause the electronic device to receive information for a first periodic advertisement of a second external electronic device, through the communication circuit from a first external electronic device. The one or more programs may comprise instructions to, when executed by the electronic device, cause the electronic device to receive, based on the information, at least one first packet advertised from the second external electronic device according to the first periodic advertisement, through the communication circuit. The one or more programs may comprise instructions to, when executed by the electronic device, cause the electronic device to, after synchronizing to broadcast isochronous stream (BIS) from the second external electronic device based on the at least one first packet, defer to output audio of the BIS with a reference volume until start of rendering of data for the BIS that is indicated by at least one second packet advertised from the second external electronic device according to a second periodic advertisement of the second external electronic device. The one or more programs may comprise instructions to, when executed by the electronic device, cause the electronic device to control the speaker to output the audio with the reference volume based on the rendering of the data received from the second external electronic device.

### [Description of the Drawings]

FIG. 1 illustrates an exemplary wireless environment including a first electronic device, a second electronic device, a third electronic device, and a fourth electronic device.
FIG. 2 is a simplified block diagram of an exemplary first electronic device.
FIG. 3 illustrates an exemplary method for deferring outputting audio with a reference volume.
FIG. 4 illustrates an example of timing for outputting audio with a reference volume.
FIG. 5 illustrates an exemplary method for deferring outputting audio with a reference volume through assistance of a first external electronic device.
FIG. 6 illustrates an exemplary method for deferring outputting audio with a reference volume through assistance of a second electronic device.
FIG. 7 illustrates an example of a start timing of fade-in of audio caused to defer outputting audio with a reference volume.
FIG. 8 to FIG. 9 illustrate an example of a method of fade-in of audio caused to defer outputting audio with a reference volume.
FIG. 10 illustrates an example of a method of deferring outputting audio to defer outputting audio with a reference volume.
FIG. 11 illustrates an exemplary method for discarding data for a broadcast isochronous stream (BIS) to defer outputting audio with a reference volume.
FIG. 12 illustrates an exemplary method for deferring synchronization to a BIS to defer outputting audio with a reference volume.
FIG. 13 illustrates an exemplary method for deferring outputting audio with a reference volume according to resumption of synchronization to a BIS.
FIG. 14 illustrates an exemplary method for controlling output of audio according to termination of synchronization to a BIS.
FIG. 15 is a block diagram of an electronic device in a network environment according to various embodiments.

### [Mode for Invention]

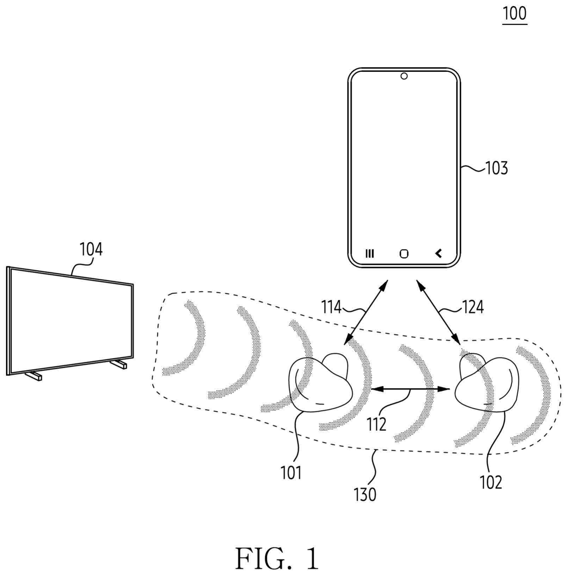

FIG. 1 illustrates an exemplary wireless environment including a first electronic device, a second electronic device, a third electronic device, and a fourth electronic device.

Referring to FIG. 1, a wireless environment 100 may include a first electronic device 101, a second electronic device 102, and a fourth electronic device 104. For example, the wireless environment 100 may further include a third electronic device 103.

The first electronic device 101 and the second electronic device 102 in the wireless environment 100 may be used to output audio provided from the fourth electronic device 104. For example, the first electronic device 101 and the second electronic device 102 may be paired. As a non-limiting example, pairing of the first electronic device 101 and the second electronic device 102 may indicate that the first electronic device 101 and the second electronic device 102 are configured as a set to provide a service. As a non-limiting example, pairing of the first electronic device 101 and the second electronic device 102 may indicate that the first electronic device 101 and the second electronic device 102 are connected through a communication link 112. In another example, the first electronic device 101 and the second electronic device 102 may be independent from each other.

For example, the audio may be outputted based on data 130 for a broadcast isochronous stream (BIS) from the fourth electronic device 104. For example, the data 130 may be broadcasted through a broadcast isochronous group (BIG) from the fourth electronic device 104. For example, the BIG may include multiple instances for the BIS. For example, an event of BIG may include one or more BIS events. For example, each of the one or more BIS events may include one or more sub-events.

For example, the one or more BIS events may include a BIS event for the first electronic device 101 and a BIS event for the second electronic device 102. For example, audio outputted through the BIS event for the first electronic device 101 and audio outputted through the BIS event for the second electronic device 102 may be the same as each other or may be different from each other. For example, in a case that audio outputted through the BIS event for the first electronic device 101 and audio outputted through the BIS event for the second electronic device 102 are different from each other, data 130 received by the first electronic device 101 may be at least partially different from data 130 received by the second electronic device 102. For example, audio outputted based on the data 130 received by the first electronic device 101 may provide content in a first language, and audio outputted based on the data 130 received by the second electronic device 102 may provide the content in a second language. For example, audio outputted based on the data 130 received by the first electronic device 101 and audio outputted based on the data 130 received by the second electronic device 102 may provide stereophonic sound. However, this is not limited thereto.

For example, when synchronization to the BIS is obtained, each of the first electronic device 101 and the second electronic device 102 may receive data 130 broadcasted through each of the one or more BIS events. For example, the first electronic device 101 may receive data 130 broadcasted from the fourth electronic device 104 for audio outputted from the second electronic device 102 that is at least partially different from audio outputted from the first electronic device 101.

As a non-limiting example, each of the first electronic device 101 and the second electronic device 102 may be connected to the third electronic device 103 through each of a link 114 (or a connection 114 (or a communication link 114)) and a link 124 (or a connection 124 (or a communication link 124)). For example, the link 114 and the link 124 may include an asynchronous connectionless link (ACL), which is a control data link. For example, the link 114 and the link 124 may be used for information on a first periodic advertisement of the fourth electronic device 104 to be exemplified below. As a non-limiting example, each of the link 114 and the link 124 may be used for data transmitted from the third electronic device 103 to each of the first electronic device 101 and the second electronic device 102 through a connected isochronous stream (CIS) to output audio provided from the third electronic device 103.

The fourth electronic device 104 in the wireless environment 100 may broadcast data 130 for the audio. Although not illustrated in FIG. 1, the fourth electronic device 104 may execute one or more advertisements to provide information for access to the data 130. For example, each of the first electronic device 101 and the second electronic device 102 may receive the data 130 broadcasted from the fourth electronic device 104 based on resources indicated based on the one or more advertisements. For example, each of the first electronic device 101 and the second electronic device 102 may synchronize to the BIS from the fourth electronic device 104 based on information identified based on the one or more advertisements and may receive the data 130 broadcasted from the fourth electronic device 104 based on the synchronization.

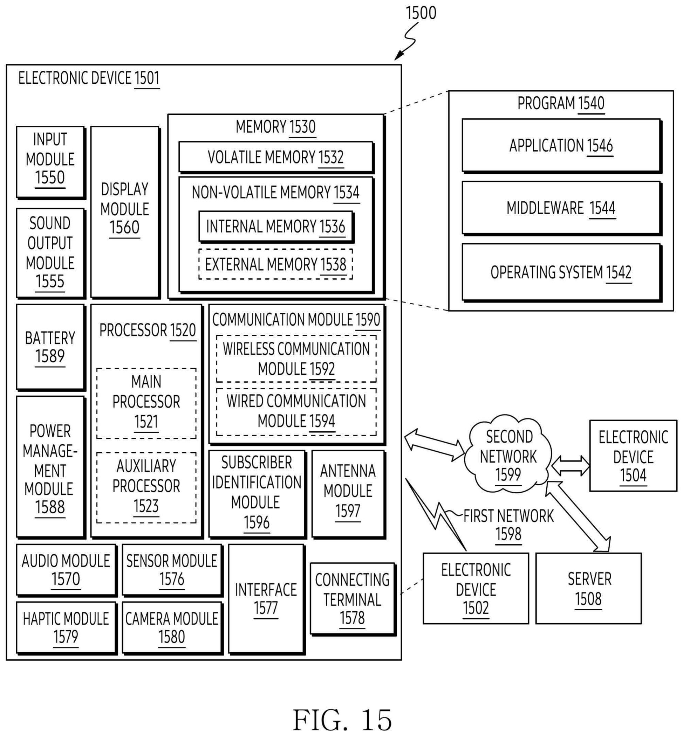

The third electronic device 103 in the wireless environment 100 may be used to assist each of the first electronic device 101 and the second electronic device 102 in synchronizing to the BIS. For example, the third electronic device 103 may include at least a portion of an electronic device 1501 of FIG. 15 or may correspond to at least a portion of the electronic device 1501 of FIG. 15.

As a non-limiting example, the third electronic device 103 may include a display, unlike each of the first electronic device 101 and the second electronic device 102. For example, the third electronic device 103 may display, on the display, a user interface to check or identify whether to output the audio from the first electronic device 101 and the second electronic device 102 based on the data 130 broadcasted from the fourth electronic device 104. For example, the third electronic device 103 may be used to receive a user input that is received with respect to the user interface and indicates that the audio is to be outputted from the first electronic device 101 and the second electronic device 102. For example, the third electronic device 103 may assist each of the first electronic device 101 and the second electronic device 102 in synchronizing to the BIS through operations for receiving the user input. As a non-limiting example, the second electronic device 102 may be used instead of the third electronic device 103 to assist the first electronic device 101 in synchronizing to the BIS. At least one operation of the third electronic device 103 for assisting the synchronization of the first electronic device 101 to the BIS in the descriptions below may be replaced with at least one operation of the second electronic device 102.

As a non-limiting example, the third electronic device 103 may include a battery having a capacity greater than that of a rechargeable battery in each of the first electronic device 101 and the second electronic device 102. The third electronic device 103 may execute a scan for a portion of the one or more advertisements executed by the fourth electronic device 104, instead of each of the first electronic device 101 and the second electronic device 102, to reduce power consumption from the rechargeable battery in each of the first electronic device 101 and the second electronic device 102. For example, the third electronic device 103 may assist each of the first electronic device 101 and the second electronic device 102 in synchronizing to the BIS through operations for the scan. For example, the third electronic device 103 may transmit information indicating a result of the scan (e.g., information on the first periodic advertisement) to each of the first electronic device 101 and the second electronic device 102. For example, the information may be transmitted to each of the first electronic device 101 and the second electronic device 102 through each of the link 114 and the link 124. However, this is not limited thereto. For example, the information may also be transmitted to each of the first electronic device 101 and the second electronic device 102 from a device (e.g., a cradle) for accommodating the first electronic device 101 and the second electronic device 102 and charging a rechargeable battery of each of the first electronic device 101 and the second electronic device 102. For example, the device for accommodating the first electronic device 101 and the second electronic device 102 may transmit the first information received from the third electronic device 103 to each of the first electronic device 101 and the second electronic device 102. As a non-limiting example, the device for accommodating the first electronic device 101 and the second electronic device 102 may execute a portion of operations of the third electronic device 103 to be exemplified below. For example, the device may transmit the information obtained according to an advertisement of the fourth electronic device 104 to each of the first electronic device 101 and the second electronic device 102, based on the operations.

According to embodiments, the third electronic device 103 and the fourth electronic device 104 may be a single device. For example, in a case that the third electronic device 103 executes a function corresponding to a source device in the wireless environment 100 like the fourth electronic device 104, operations of the fourth electronic device 104 to be exemplified below may be replaced with operations of the third electronic device 103. However, this is not limited thereto.

As a non-limiting example, unlike the illustration of FIG. 1, the third electronic device 103 may be implemented as a device for accommodating the first electronic device 101 and the second electronic device 102 and charging a rechargeable battery of each of the first electronic device 101 and the second electronic device 102.

For example, a timing at which the first electronic device 101 may output audio of the BIS based on synchronization to the BIS may be different from a timing at which the second electronic device 102 may output audio of the BIS based on synchronization to the BIS. Such a difference may be recognized by a user. As a non-limiting example, such a difference may reduce quality of user experience. As a non-limiting example, such a difference may cause discomfort of the user. Since such a difference may cause discomfort of the user, the first electronic device 101 may control a volume of the audio to reduce recognition of the difference. For example, the first electronic device 101 may synchronize a volume of audio outputted from the second electronic device 102 and a volume of audio outputted from the first electronic device 101. For example, the first electronic device 101 may defer to output the audio with a reference volume for the synchronization. For example, the reference volume may indicate a volume intended or targeted by the first electronic device 101 and the fourth electronic device 104. For example, the reference volume may indicate a volume corresponding to a volume setting of the first electronic device 101 and a volume setting of the data 130 broadcasted from the fourth electronic device 104. As a non-limiting example, the reference volume may indicate an original volume of the audio.

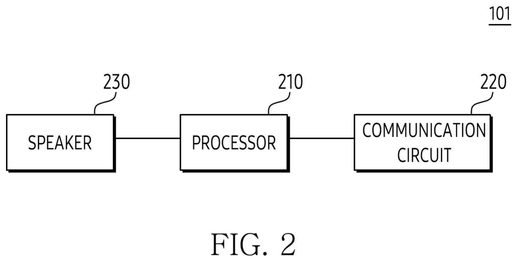

The first electronic device 101 may execute operations for deferring to output the audio with the reference volume. Components of the first electronic device 101 for executing the operations are exemplified in descriptions of FIG. 2.

FIG. 2 is a simplified block diagram of an exemplary first electronic device.

Referring to FIG. 2, a first electronic device 101 may include at least a portion of the electronic device 1502 of FIG. 15 or may correspond to at least a portion of the electronic device 1502 of FIG. 15. The first electronic device 101 may include a processor 210, a communication circuit 220, and a speaker 230.

The processor 210 may include one or more processors (or one or more processing circuitry) or may include at least one processor (or at least one processing circuitry). For example, the processor 210 may be configured to execute instructions stored in memory (not illustrated) in the first electronic device 101. The memory may include one or more storage media. The instructions, when executed by the processor 210 individually or collectively, may cause the first electronic device 101 to perform operations to be exemplified below.

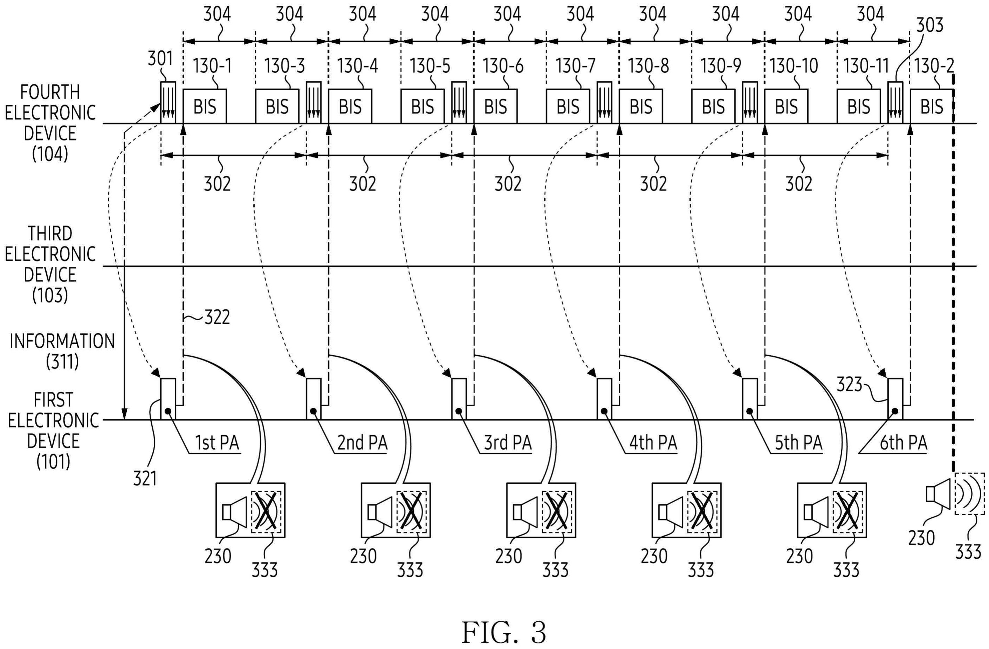

For example, the processor 210 may be operably (or operatively) coupled to each of the communication circuit 220 and the speaker 230. The processor 210 being operably coupled to each of the communication circuit 220 and the speaker 230 may indicate that the processor 210 is directly connected to each of the communication circuit 220 and the speaker 230. The processor 210 being operably coupled to each of the communication circuit 220 and the speaker 230 may indicate that the processor 210 is connected (e.g., indirectly connected) to each of the communication circuit 220 and the speaker 230 through at least one other component (not illustrated in FIG. 2) of the first electronic device 101. The processor 210 being operably coupled to each of the communication circuit 220 and the speaker 230 may indicate that the processor 210 controls each of the communication circuit 220 and the speaker 230 for at least a portion of operations to be exemplified in descriptions of FIGS. 3 to 14. The processor 210 being operably coupled to each of the communication circuit 220 and the speaker 230 may indicate that the processor 210 executes one or more instructions for the control.

The communication circuit 220 may support legacy Bluetooth and/or Bluetooth low energy (BLE).

For example, the communication circuit 220 may be used for reception of one or more packets advertised from the fourth electronic device 104. For example, the communication circuit 220 may be used for a broadcast isochronous stream (BIS) from the fourth electronic device 104. For example, the communication circuit 220 may be used for the synchronization to the BIS. For example, the communication circuit 220 may be used for reception of data 130 broadcasted from the fourth electronic device 104.

For example, the communication circuit 220 may be used for communication with the second electronic device 102. As a non-limiting example, the communication with the second electronic device 102 may be executed for the synchronization to the BIS. For example, a network for the communication with the second electronic device 102 may be different from a network for the data 130 broadcasted from the fourth electronic device 104. For example, the network for the communication with the second electronic device 102 may include a network for a basic rate (BR) or an enhanced data rate (EDR) of Bluetooth (or legacy Bluetooth). However, this is not limited thereto.

For example, the communication circuit 220 may be used for communication with the third electronic device 103. As a non-limiting example, the communication with the third electronic device 103 may be executed for the synchronization to the BIS. For example, a network for the communication with the third electronic device 103 may be different from a network for the data 130 broadcasted from the fourth electronic device 104. For example, the network for the communication with the third electronic device 103 may include a network for a CIS. However, this is not limited thereto.

The speaker 230 may be used to output the audio based on the data 130. As a non-limiting example, the processor 210 may control or cause the speaker 230 to output the audio based on rendering of data received from the third electronic device 103. The rendering may indicate a process (or a procedure) of generating a final version of audio to output the audio. For example, the processor 210 may execute operations of the first electronic device 101 to be exemplified below through the communication circuit 220 and/or the speaker 230 exemplified above. For example, the processor 210 may execute operations for deferring to output the audio with the reference volume. The operations are exemplified in descriptions of FIG. 3.

FIG. 3 illustrates an exemplary method for deferring outputting audio with a reference volume.

Referring to FIG. 3, the third electronic device 103 may provide, to the first electronic device 101, information 311 on a first periodic advertisement 301 of the fourth electronic device 104 to indicate the first periodic advertisement 301. As a non-limiting example, the information 311 may be transmitted to the first electronic device 101 through the link 114. As a non-limiting example, the information 311 may be advertised or broadcasted from the third electronic device 103. For example, in order to indicate the first periodic advertisement (PA) 301 of the fourth electronic device 104, the information 311 may indicate an interval of the first periodic advertisement 301, a hopping sequence of the first periodic advertisement 301, and/or an access address for synchronizing to the BIS. For example, the first periodic advertisement 301 may include transmission of at least one first packet (e.g., including AUX_SYNC_IND packet) executed by the fourth electronic device 104 according to the hopping sequence in the interval. For example, the at least one first packet may include periodic advertisement data.

For example, the third electronic device 103 may receive a first advertising packet (e.g., an ADV_EXT_IND packet), which is broadcasted on each of primary advertising channels (e.g., Ch 37, Ch 38, and Ch 39) from the fourth electronic device 104 and indicates that additional data is provided through other (or additional) advertisements (e.g., extended advertisements). For example, the first advertising packet may indicate a second advertising packet (e.g., AUX_ADV _IND packet) (or extended advertisement packet). For example, the third electronic device 103 may receive the second advertising packet, which is broadcasted (or advertised) on a portion of secondary advertising channels different from the primary advertising channels from the fourth electronic device 104 and indicates the first periodic advertisement 301, based on the first advertising packet. For example, the third electronic device 103 may obtain information 311 (e.g., logical link (LL)_PERIODIC_SYNC_IND), based on the second advertising packet and may transmit the information 311 to the first electronic device 101.

The processor 210 of the first electronic device 101 may receive the information 311 through the communication circuit 220. The processor 210 of the first electronic device 101 may receive, through the communication circuit 220, at least one first packet 321 (e.g., including AUX_SYNC_IND packet) advertised from the fourth electronic device 104 according to the first periodic advertisement 301, based on the information 311.

As a non-limiting example, the first periodic advertisement 301 may indicate a periodic advertisement of the fourth electronic device 104 in which the first electronic device 101 first receives at least one packet (e.g., at least one first packet 321) advertised from the fourth electronic device 104. For example, the first periodic advertisement 301 may indicate a periodic advertisement of the fourth electronic device 104 to which the first electronic device 101 initially synchronizes.

The at least one first packet 321 may include information on an interval 302 of a periodic advertisement of the fourth electronic device 104, information on an offset (not illustrated) of transmission according to the periodic advertisement, information on a channel map of the periodic advertisement, information on a connection of ACL, information on an initial value of a cyclic redundancy check (CRC), information on a counter (e.g., a PeriodicEventCounter) of an event of the periodic advertisement, and information (or advertisement data) on a broadcast isochronous group (BIG) (e.g., including multiple instances for the BIS) that is scheduled (or generated) (or obtained) by the fourth electronic device 104.

The processor 210 may synchronize to a broadcast isochronous stream (BIS) from the fourth electronic device 104 based on at least one first packet 321, as indicated by an arrow 322. For example, the synchronization to the BIS may indicate receiving (successfully) data 130-1 for the BIS broadcasted from the fourth electronic device 104.

For example, the processor 210 may defer to output the audio with a reference volume 333 until start of rendering of data 130-2 for the BIS that is indicated by at least one second packet 323 advertised from the fourth electronic device 104 according to a second periodic advertisement 303 of the fourth electronic device 104, after the synchronization to the BIS.

As a non-limiting example, a timing at which the first electronic device 101 synchronizes to the BIS may be different from a timing at which the second electronic device 102 (not illustrated in FIG. 3) synchronizes to the BIS from the fourth electronic device 104.

Assume that the first electronic device 101 outputs the audio with the reference volume 333 according to the data 130-1 in response to the synchronization of the first electronic device 101 to the BIS and the second electronic device 102 outputs the audio with the reference volume 333 according to data for the BIS in response to the synchronization of the second electronic device 102 to the BIS. In this case, a first timing of outputting the audio with the reference volume 333 from the first electronic device 101 may be different from a second timing of outputting the audio with the reference volume 333 from the second electronic device 102, as the synchronization of the first electronic device 101 to the BIS is executed before the synchronization of the second electronic device 102 to the BIS. A difference between the first timing and the second timing may cause discomfort to a user.

For example, the first electronic device 101 may defer to output the audio with the reference volume 333 to reduce such discomfort. As a non-limiting example, the processor 210 may defer to output the audio with the reference volume 333 until the start of the rendering of the data 130-2, instead of outputting the audio with the reference volume 333 in response to the synchronization to the BIS.

As a non-limiting example, deferring to output the audio with the reference volume 333 may be executed by outputting the audio with a volume lower than the reference volume 333 before the start of the rendering of the data 130-2 and outputting the audio with the reference volume 333 based on the rendering of the data 130-2. For example, the processor 210 may set (or control) a volume of the audio outputted based on rendering of the data 130-1 to a first volume lower than the reference volume 333. For example, the processor 210 may set a volume of the audio outputted based on rendering of data 130-3 for the BIS (e.g., data broadcasted through a BIS event starting after an interval 304 (e.g., ISO_Interval) from an anchor point of a BIS event for broadcasting the data 130-1) to a second volume that is lower than the reference volume 333 and is greater than or equal to the first volume. For example, the processor 210 may set a volume of the audio outputted based on rendering of data 130-4 for the BIS (e.g., data broadcasted through a BIS event starting after an interval 304 (e.g., ISO_Interval) from an anchor point of a BIS event for broadcasting the data 130-3) to a third volume that is lower than the reference volume 333 and is greater than or equal to the second volume. For example, the processor 210 may set a volume of the audio outputted based on rendering of data 130-5 for the BIS (e.g., data broadcasted through a BIS event starting after an interval 304 (e.g., ISO_Interval) from an anchor point of a BIS event for broadcasting the data 130-4) to a fourth volume that is lower than the reference volume 333 and is greater than or equal to the third volume. For example, the processor 210 may set a volume of the audio outputted based on rendering of data 130-6 for the BIS (e.g., data broadcasted through a BIS event starting after an interval 304 (e.g., ISO_Interval) from an anchor point of a BIS event for broadcasting the data 130-5) to a fifth volume that is lower than the reference volume 333 and is greater than or equal to the fourth volume. For example, the processor 210 may set a volume of the audio outputted based on rendering of data 130-7 for the BIS (e.g., data broadcasted through a BIS event starting after an interval 304 (e.g., ISO_Interval) from an anchor point of a BIS event for broadcasting the data 130-6) to a sixth volume that is lower than the reference volume 333 and is greater than or equal to the fifth volume. For example, the processor 210 may set a volume of the audio outputted based on rendering of data 130-8 for the BIS (e.g., data broadcasted through a BIS event starting after an interval 304 (e.g., ISO_Interval) from an anchor point of a BIS event for broadcasting the data 130-7) to a seventh volume that is lower than the reference volume 333 and is greater than or equal to the sixth volume. For example, the processor 210 may set a volume of the audio outputted based on rendering of data 130-9 for the BIS (e.g., data broadcasted through a BIS event starting after an interval 304 (e.g., ISO_Interval) from an anchor point of a BIS event for broadcasting the data 130-8) to an eighth volume that is lower than the reference volume 333 and is greater than or equal to the seventh volume. For example, the processor 210 may set a volume of the audio outputted based on rendering of data 130-10 for the BIS (e.g., data broadcasted through a BIS event starting after an interval 304 (e.g., ISO_Interval) from an anchor point of a BIS event for broadcasting the data 130-9) to a ninth volume that is lower than the reference volume 333 and is greater than or equal to the eighth volume. For example, the processor 210 may set a volume of the audio outputted based on rendering of data 130-11 for the BIS (e.g., data broadcasted through a BIS event starting after an interval 304 (e.g., ISO_Interval) from an anchor point of a BIS event for broadcasting the data 130-10) to a tenth volume that is lower than the reference volume 333 and is greater than or equal to the ninth volume. For example, the first volume to the tenth volume may be set or identified based on information on a counter of an event of the periodic advertisement in at least one packet (e.g., the at least one first packet 321) advertised according to a periodic advertisement of the fourth electronic device 104.

As a non-limiting example, deferring to output the audio with the reference volume may be executed by bypassing, refraining from, blocking, or skipping to output the audio before the start of the rendering of the data 130-2 and outputting the audio with the reference volume 333 based on the rendering of the data 130-2. For example, the processor 210 may set volumes of the audio according to the rendering of the data 130-1, the audio according to the rendering of the data 130-3, the audio according to the rendering of the data 130-4, the audio according to the rendering of the data 130-5, the audio according to the rendering of the data 130-6, the audio according to the rendering of the data 130-7, the audio according to the rendering of the data 130-8, the audio according to the rendering of the data 130-9, the audio according to the rendering of the data 130-10, and the audio according to the rendering of the data 130-11 to a minimum volume (e.g., 0 (zero)) and may set a volume of the audio according to the rendering of the data 130-2 to the reference volume 333. For example, the processor 210 may bypass output of the audio according to the rendering of the data 130-1, the audio according to the rendering of the data 130-3, the audio according to the rendering of the data 130-4, the audio according to the rendering of the data 130-5, the audio according to the rendering of the data 130-6, the audio according to the rendering of the data 130-7, the audio according to the rendering of the data 130-8, the audio according to the rendering of the data 130-9, the audio according to the rendering of the data 130-10, and the audio according to the rendering of the data 130-11 and may set a volume of the audio according to the rendering of the data 130-2 to the reference volume 333.

As a non-limiting example, as illustrated in FIG. 3, a second periodic advertisement 303 may be a periodic advertisement of the fourth electronic device 104 before occurrence of timeout of synchronization to the BIS. For example, the second periodic advertisement 303 used to output the audio with the reference volume 333 may be determined, set, or identified, based on a timeout parameter for the synchronization to the BIS. For example, the processor 210 may set the second periodic advertisement 303 used to output the audio based on the timeout parameter to defer to output the audio with the reference volume 333 as much as possible.

For example, the processor 210 may control the speaker 230 to output the audio with the reference volume 333 based on the rendering of the data 130-2 received from the fourth electronic device 104, after deferring to output the audio with the reference volume 333.

Although not illustrated in FIG. 3, the second electronic device 102 may receive the information 311 according to the operation exemplified in descriptions of FIG. 3, may synchronize to BIS from the fourth electronic device 104 based on at least one packet advertised according to a periodic advertisement of the fourth electronic device 104, and may defer to output the audio with the reference volume 333 until start of rendering of data for the BIS (e.g., data identical to the data 130-2 or corresponding to the data 130-2) that is indicated by at least one second packet 323 advertised according to the second periodic advertisement 303 after the synchronization.

For example, since a timing at which the first electronic device 101 outputs the audio with the reference volume 333 is identical to a timing at which the second electronic device 102 outputs the audio with the reference volume 333, a volume of the audio outputted from the first electronic device 101 and a volume of the audio outputted from the second electronic device 102 may be synchronized with each other even when the second electronic device 102 synchronizes to the BIS after (or before) the synchronization of the first electronic device 101 to the BIS.

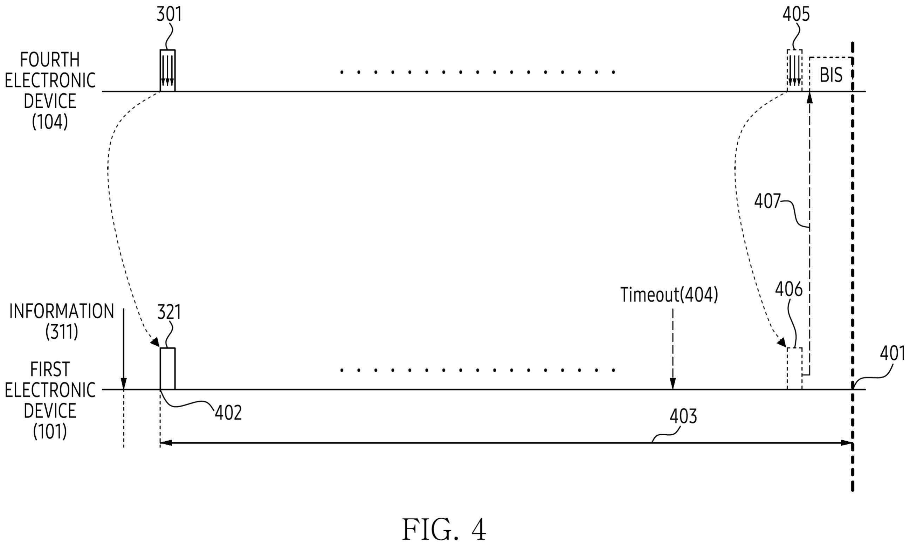

For example, a timing for outputting the audio with the reference volume 333 may be variously set in the first electronic device 101. The timing is exemplified in descriptions of FIG. 4.

FIG. 4 illustrates an example of timing for outputting audio with a reference volume.

Referring to FIG. 4, the processor 210 of the first electronic device 101 may set a timing 401 at which the audio is to be outputted with the reference volume 333, in response to receiving the information 311 from the third electronic device 103. For example, the processor 210 may defer to output the audio with the reference volume 333, based on the timing 401.

As a non-limiting example, the processor 210 may set the timing 401 at which the audio is to be outputted with the reference volume 333 in response to the reception of the information 311 before at least one first packet 321 is received and may defer to output the audio with the reference volume 333 based on the timing 401.

As a non-limiting example, the processor 210 may set the timing 401 based on a timeout parameter of a periodic advertisement of the fourth electronic device 104, an interval (e.g., the interval 302 of FIG. 3) of the periodic advertisement of the fourth electronic device 104, and a counter of an event of the periodic advertisement of the fourth electronic device 104, in response to the reception of the information 311. For example, the processor 210 may set the timing 401 based on the timeout parameter, the interval, and the counter, before at least one packet advertised according to the periodic advertisement of the fourth electronic device 104 is received. For example, the processor 210 may set the timing 401 based on the timeout parameter, the interval, and the counter, regardless of whether the at least one packet is received.

As a non-limiting example, the processor 210 may first receive at least one first packet 321 advertised according to the first periodic advertisement 301, after the information 311 is received. For example, the processor 210 may set a timing after a designated time 403 from a timing 402 at which the at least one first packet 321 is received as the timing 401. For example, the designated time 403 may be constant or may be variable. As a non-limiting example, the designated time 403 may be set based on a quality of the communication link 114 (or a quality of communication) between the first electronic device 101 and the third electronic device 103. A method of obtaining the quality will be exemplified below.

As a non-limiting example, the processor 210 may set the timing 401 based on the quality of the communication link 114, in response to the reception of the information 311. For example, the processor 210 may set the timing 401, based on the number of retransmissions caused during communication with the third electronic device 103 executed before the reception of the information 311 and/or the number of occurrences of CRC errors caused during the communication. For example, the processor 210 may decrease an interval between a timing of synchronization to the BIS and the timing 401, as the number of the retransmissions increases. For example, the processor 210 may decrease the interval between the timing of synchronization to the BIS and the timing 401, as the number of occurrences of the CRC errors increases.

As a non-limiting example, the processor 210 may set the timing 401 based on a state of a communication environment related to the fourth electronic device 104, after the information 311 is received. For example, the processor 210 may set the timing 401, based on the number of attempts to synchronize to the BIS from the fourth electronic device 104.

As a non-limiting example, the processor 210 may adaptively change the timing 401 according to a state of synchronization to the BIS. For example, the processor 210 may execute an operation for outputting the audio with the reference volume 333 as soon as possible, based on detecting occurrence of a timeout 404 of the synchronization to the BIS. For example, the processor 210 may monitor, check, or identify whether at least one packet 406 according to a periodic advertisement 405 of the fourth electronic device 104 is received, in response to detecting occurrence of the timeout 404. The processor 210 may set the timing 401 based on reception of the at least one packet 406. For example, the processor 210 may monitor, check, or identify whether synchronization 407 to the BIS is completed (or successful), based on detecting occurrence of the timeout 404. For example, the processor 210 may set the timing 401 based on completion of the synchronization 407 to the BIS.

For example, the first electronic device 101 may synchronize audio outputted from the first electronic device 101 with audio outputted from another electronic device (e.g., the second electronic device 102), through setting of the timing 401.

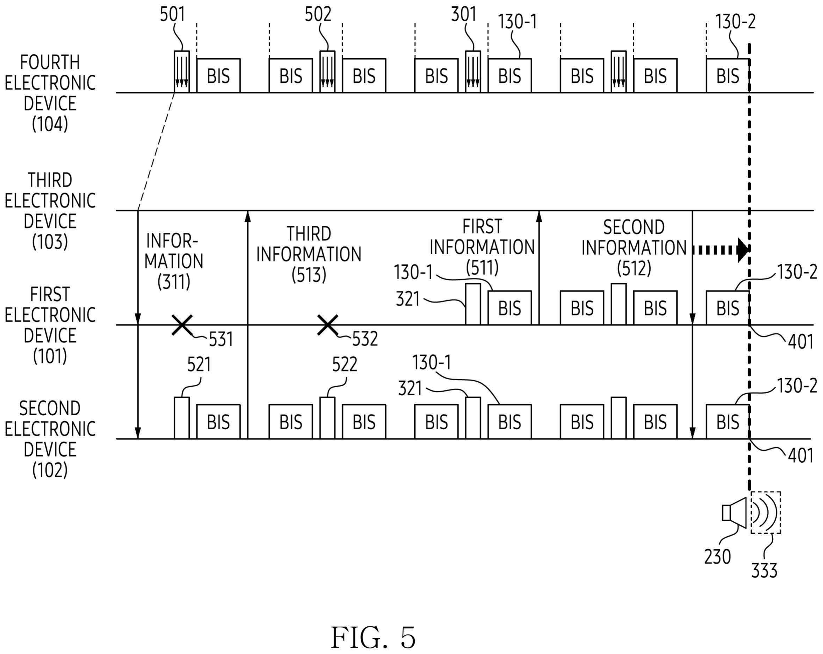

For example, the timing 401 may be set through assistance of the third electronic device 103. The assistance of the third electronic device 103 for setting the timing 401 is exemplified in descriptions of FIG. 5.

FIG. 5 illustrates an exemplary method for deferring outputting audio with a reference volume through assistance of a first external electronic device.

Referring to FIG. 5, the second electronic device 102 may receive at least one packet 521 advertised according to a periodic advertisement 501 of the fourth electronic device 104, based on the information 311 from the third electronic device 103. The second electronic device 102 may synchronize to BIS from the fourth electronic device 104, based on the at least one packet 521. As a non-limiting example, the second electronic device 102 may defer, bypass, refrain from, or skip to output the audio, until outputting audio of the BIS with the reference volume 333 according to a timing 401 (e.g., a timing to be determined based on second information 512) after the synchronization. As a non-limiting example, the second electronic device 102 may output the audio with a volume lower than the reference volume 333 until outputting audio of the BIS with the reference volume 333 according to the timing 401, after the synchronization.

The second electronic device 102 may transmit, to the third electronic device 103, third information 513 on success of the synchronization to the BIS, in response to the synchronization. The third information 513 may be transmitted through the communication link 124. The third electronic device 103 may receive the third information 513.

For example, the processor 210 of the first electronic device 101 may execute or cause an attempt of synchronization to the BIS from the fourth electronic device 104, after the information 311 is received. As indicated by an indication 531, the attempt of the synchronization of the first electronic device 101 may fail, unlike the second electronic device 102. For example, the first electronic device 101 may fail to receive at least one packet 521 advertised according to the periodic advertisement 501 based on the information 311 and may fail to receive at least one packet 522 advertised according to the periodic advertisement 502 of the fourth electronic device 104, as indicated by an indication 532.

For example, the processor 210 of the first electronic device 101 may receive at least one first packet 321 advertised according to the first periodic advertisement 301, through the communication circuit 220. For example, the processor 210 may synchronize to the BIS from the fourth electronic device 104, based on the at least one first packet 321. For example, the processor 210 may receive data 130-1 broadcasted from the fourth electronic device 104.

The processor 210 may transmit, to the third electronic device 103, first information 511 on success of synchronization to the BIS, in response to synchronizing to the BIS. The first information 511 may be transmitted through the communication link 114. The third electronic device 103 may receive the first information 511.

As a non-limiting example, the processor 210 may defer, bypass, refrain from, or skip to output the audio, until outputting audio of the BIS with the reference volume 333 according to the timing 401, after the synchronization. As a non-limiting example, the processor 210 may output the audio with a volume lower than the reference volume 333, until outputting audio of the BIS with the reference volume 333 according to the timing 401, after the synchronization.

For example, the third electronic device 103 may transmit, to each of the first electronic device 101 and the second electronic device 102, second information 512 on a timing at which the audio is to be outputted with the reference volume 333, based on the first information 511 and the third information 513. The second information 512 may indicate the timing 401. For example, the second information 512 may be transmitted through each of the communication link 114 and the communication link 124. Each of the first electronic device 101 and the second electronic device 102 may receive the second information 512.

For example, the processor 210 of the first electronic device 101 may defer to output the audio with the reference volume 333, until start of rendering of data 130-2, based on the second information 512. For example, the processor 210 may set the timing 401 based on the second information 512 and may output the audio with the reference volume 333 in response to the timing 401.

For example, the second electronic device 102 may set the timing 401 based on the second information 512 and may output the audio with the reference volume 333 in response to the timing 401.

For example, since a start timing of outputting the audio with the reference volume 333 from the first electronic device 101 and a start timing of outputting the audio with the reference volume 333 from the second electronic device 102 are identical to the timing 401 informed from the third electronic device 103, the audio outputted from the first electronic device 101 and audio outputted from the second electronic device 102 may be synchronized with each other.

As described above, the third electronic device 103 may assist in synchronizing audio outputted from the first electronic device 101 and audio outputted from the second electronic device 102.

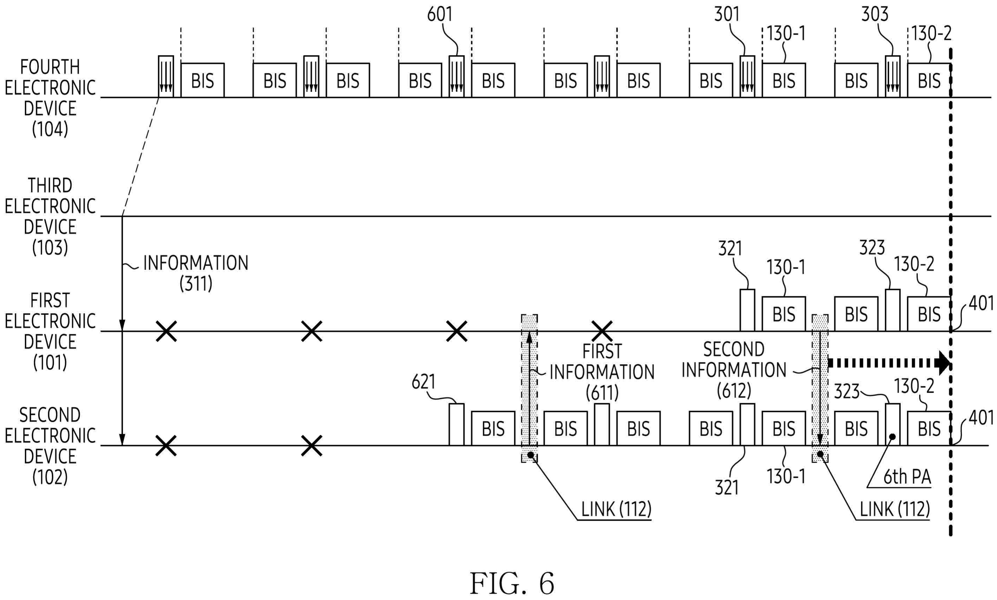

For example, the timing 401 may be set through assistance of the second electronic device 102. The assistance of the second electronic device 102 for setting the timing 401 is exemplified in descriptions of FIG. 6.

FIG. 6 illustrates an exemplary method for deferring outputting audio with a reference volume through assistance of a second electronic device.

Referring to FIG. 6, the second electronic device 102 may fail to receive at least one packet according to a periodic advertisement of the fourth electronic device 104 based on the information 311 from the third electronic device 103, before receiving at least one packet 621. For example, the second electronic device 102 may receive at least one packet 621 advertised according to a periodic advertisement 601 of the fourth electronic device 104, based on the information 311. The second electronic device 102 may synchronize to the BIS from the fourth electronic device 104, based on the at least one packet 621. As a non-limiting example, the second electronic device 102 may defer, bypass, refrain from, or skip outputting the audio until outputting audio of the BIS with the reference volume 333 according to the timing 401, after the synchronization. As a non-limiting example, the second electronic device 102 may output the audio with a volume lower than the reference volume 333 until outputting audio of the BIS with the reference volume 333 according to the timing 401, after the synchronization.

The second electronic device 102 may transmit, to the first electronic device 101, first information 611 on success of the synchronization to the BIS, in response to the synchronization. The first information 611 may be transmitted through the communication link 112. The processor 210 of the first electronic device 101 may receive the first information 611 through the communication circuit 220.

For example, the processor 210 may execute or cause an attempt of synchronization to the BIS from the fourth electronic device 104 after the information 311 is received from the third electronic device 103. The attempt of the first electronic device 101 to synchronize may fail unlike the second electronic device 102. For example, the processor 210 may fail to receive at least one packet according to a periodic advertisement of the fourth electronic device 104 based on the information 311 from the third electronic device 103, before receiving at least one first packet 321.

For example, the processor 210 may receive at least one first packet 321 advertised according to the first periodic advertisement 301 through the communication circuit 220. For example, the processor 210 may synchronize to the BIS from the fourth electronic device 104 based on the at least one first packet 321. For example, the processor 210 may receive data 130-1 broadcasted from the fourth electronic device 104.

The processor 210 may transmit, to the second electronic device 102, second information 612 on success of synchronization to the BIS, in response to synchronizing to the BIS. The second information 612 may be transmitted through the communication link 112. The second electronic device 102 may receive the second information 612.

As a non-limiting example, the processor 210 may defer, bypass, refrain from, or skip outputting the audio until outputting audio of the BIS with the reference volume 333 according to the timing 401, after the synchronization. As a non-limiting example, the processor 210 may output the audio with a volume lower than the reference volume 333 until outputting audio of the BIS with the reference volume 333 according to the timing 401, after the synchronization.

For example, the second information 612 may indicate a timing 401 at which the audio is to be outputted with the reference volume 333.

For example, the processor 210 may output the audio with the reference volume 333 in response to the timing 401, based on the second information 612. As a non-limiting example, the processor 210 may set, as the timing 401, a start timing of rendering of data (e.g., the data 130-2) for the BIS that is indicated by at least one packet (e.g., the at least one second packet 323) advertised from the fourth electronic device 104 after transmitting the second information 612 to the second electronic device 102.

For example, the second electronic device 102 may output the audio with the reference volume 333 in response to the timing 401, based on the second information 612. As a non-limiting example, the second electronic device 102 may set, as the timing 401, a start timing of rendering of data (e.g., the data 130-2) for the BIS that is indicated by at least one packet (e.g., the at least one second packet 323) advertised from the fourth electronic device 104 after receiving the second information 612.

For example, since a start timing of outputting the audio with the reference volume 333 from the first electronic device 101 and a start timing of outputting the audio with the reference volume 333 from the second electronic device 102 are determined or identified according to negotiation between the first electronic device 101 and the second electronic device 102, audio outputted from the first electronic device 101 and audio outputted from the second electronic device 102 may be synchronized with each other.

As described above, the first electronic device 101 and the second electronic device 102 may synchronize audio outputted from the first electronic device 101 to audio outputted from the second electronic device 102 through signalings through the link 112.

Referring back to FIG. 3, the processor 210 may execute a fade-in of the audio to defer outputting the audio with the reference volume 333. For example, the processor 210 may control the speaker 230 to fade into the reference volume 333 in the audio to defer outputting the audio with the reference volume 333.

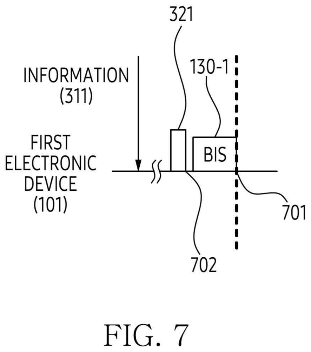

For example, the processor 210 may set a start timing of the fade-in of the audio. The start timing is exemplified in descriptions of FIG. 7.

FIG. 7 illustrates an example of a start timing of fade-in of audio caused to defer outputting audio with a reference volume.

Referring to FIG. 7, the processor 210 may set a start timing of a fade-in of the audio as a start timing of rendering of data for the BIS that is indicated by at least one packet advertised according to a periodic advertisement of the fourth electronic device 104. For example, the processor 210 may set a start timing of the fade-in of the audio as a start timing 701 of rendering of data 130-1 for the BIS that is indicated by at least one first packet 321 according to a first periodic advertisement (e.g., the first periodic advertisement 301 of FIG. 3).

For example, the processor 210 may set a start timing of the fade-in of the audio as a reception timing of at least one packet advertised according to a periodic advertisement of the fourth electronic device 104. For example, the processor 210 may set a start timing of the fade-in of the audio as a reception timing 702 of at least one first packet 321 according to the first periodic advertisement 301.

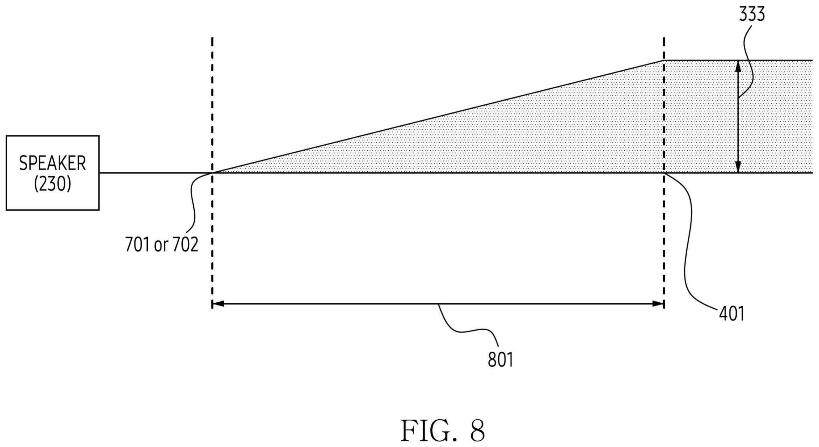

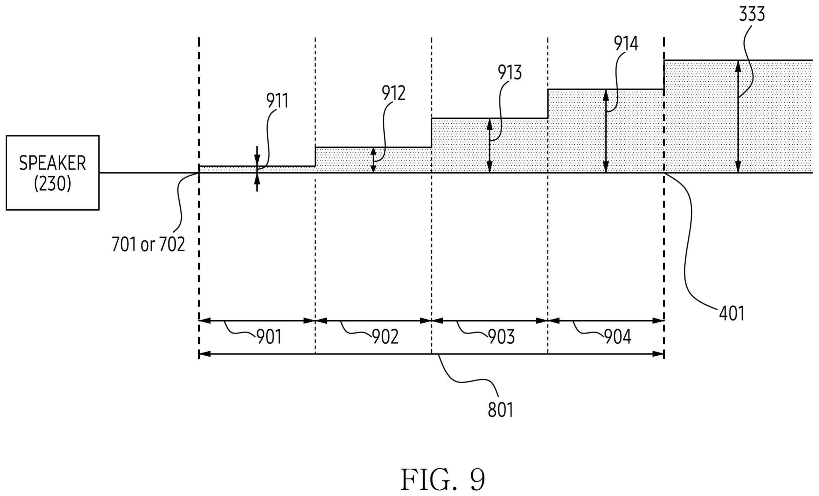

Referring back to FIG. 3, the processor 210 may control the speaker 230 to fade into the reference volume 333 in the audio during a time interval from a start timing (e.g., the start timing 701 or the reception timing 702) exemplified in the description of FIG. 7 to a start timing (e.g., the start timing 401) of rendering of the data 130-2. The fade-in of the audio during the time interval may be implemented in various ways. The fade-in of the audio during the time interval is exemplified in descriptions of FIGS. 8 and 9.

FIG. 8 to FIG. 9 illustrate an example of a method of fade-in of audio caused to defer outputting audio with a reference volume.

Referring to FIG. 8, the processor 210 may control the speaker 230 to fade into the reference volume 333 in the audio during a time interval 801 from the start timing 701 or the reception timing 702 exemplified in the description of FIG. 7 to the timing 401 exemplified in the description of FIG. 4, in order to defer outputting the audio with the reference volume 333. For example, the processor 210 may control the speaker 230 to continuously fade into the reference volume 333 in the audio, as illustrated in FIG. 8. For example, the processor 210 may use information on a counter of a periodic advertisement of the fourth electronic device 104 to recognize or identify a length of the time interval 801 at which the audio is to be faded in. For example, the processor 210 may recognize or identify the length of the time interval 801, based on a counter of an event of the first periodic advertisement 301 obtained from at least one first packet 321 and a counter of an event of the second periodic advertisement 303 obtained from at least one second packet 323.

Referring to FIG. 9, the processor 210 may control the speaker 230 to fade into the reference volume 333 in the audio during a time interval 801 from the start timing 701 or the reception timing 702 exemplified in the description of FIG. 7 to the timing 401 exemplified in the description of FIG. 4, in order to defer outputting the audio with the reference volume 333. For example, the processor 210 may control the speaker 230 to discontinuously fade into the reference volume 333 in the audio, as illustrated in FIG. 9. For example, the processor 210 may use information on a counter of a periodic advertisement of the fourth electronic device 104 to recognize or identify a length of the time interval 801 in which the audio is to be faded in. For example, the processor 210 may recognize or identify the length of the time interval 801 based on a counter of an event of the first periodic advertisement 301 obtained from at least one first packet 321 and a counter of an event of the second periodic advertisement 303 obtained from at least one second packet 323.

As a non-limiting example, the time interval 801 of FIG. 9 may include a plurality of partial intervals. Each of the plurality of partial intervals may be an interval in which a volume of the audio is maintained to discontinuously fade the audio. For example, the time interval 801 may include a first partial interval 901, a second partial interval 902, a third partial interval 903, and a fourth partial interval 904. As a non-limiting example, the processor 210 may divide the time interval 801 into the first partial interval 901, the second partial interval 902, the third partial interval 903, and the fourth partial interval 904 such that a length of the first partial interval 901, a length of the second partial interval 902, a length of the third partial interval 903, and a length of the fourth partial interval 904 are identical to each other. As a non-limiting example, the processor 210 may set or identify the length of the first partial interval 901, the length of the second partial interval 902, the length of the third partial interval 903, and the length of the fourth partial interval 904, based on information on a counter of a periodic advertisement of the fourth electronic device 104.

For example, the processor 210 may output the audio with a first volume 911 during the first partial interval 901, output the audio with a second volume 912 during the second partial interval 902, output the audio with a third volume 913 during the third partial interval 903, and output the audio with a fourth volume 914 during the fourth partial interval 904, in order to fade into the reference volume 333 in the audio during the time interval 801.

Referring back to FIG. 3, the processor 210 may defer outputting the audio to defer outputting the audio with the reference volume 333.

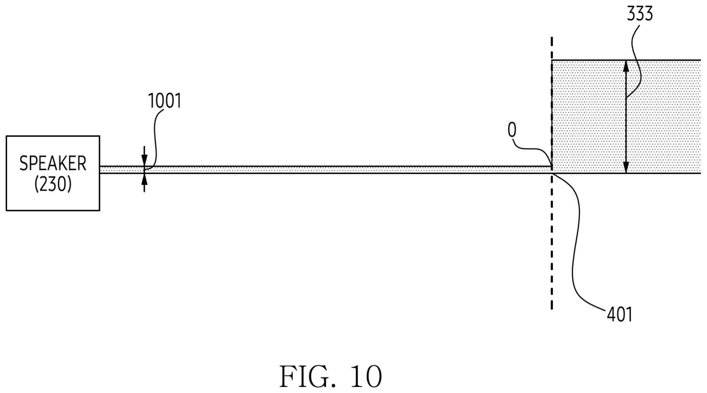

FIG. 10 illustrates an example of a method of deferring outputting audio to defer outputting audio with a reference volume.

Referring to FIG. 10, the processor 210 may defer outputting the audio through the speaker 230, before outputting the audio with the reference volume 333 from the timing 401, as illustrated in FIG. 10. For example, even when the processor 210 synchronizes to the BIS, the processor 210 may control the speaker 230 so that the audio has a minimum volume 1001 (e.g., 0 (zero)), before the timing 401.

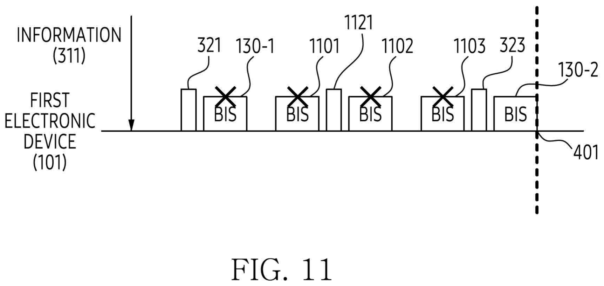

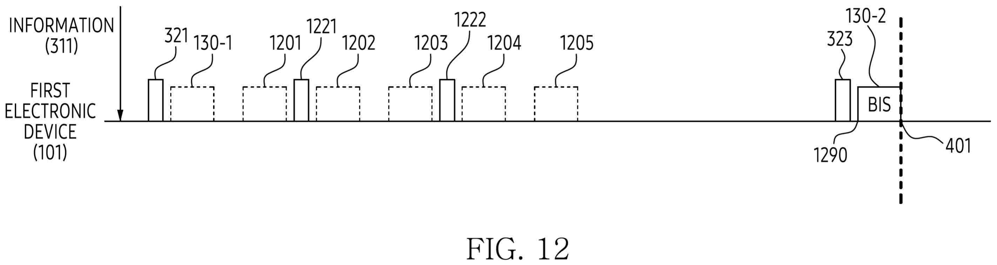

As illustrated in FIG. 10, deferring to output the audio by setting a volume of the audio to the minimum volume 1001 before outputting the audio with the reference volume 333 is merely exemplary. For example, setting a volume of the audio to the minimum volume 1001 before outputting the audio with the reference volume 333 may be replaced with another operation. The other operation is exemplified in descriptions of FIGS. 11 and 12.

FIG. 11 illustrates an exemplary method for discarding data for a broadcast isochronous stream (BIS) to defer outputting audio with a reference volume.

FIG. 12 illustrates an exemplary method for deferring synchronization to a BIS to defer outputting audio with a reference volume.

Referring to FIG. 11, the processor 210 of the first electronic device 101 may receive information 311 from the third electronic device 103. The processor 210 may receive at least one first packet 321 according to a first periodic advertisement 301 (not illustrated) of the fourth electronic device 104, based on the information 311. For example, the processor 210 may synchronize to the BIS from the fourth electronic device 104, based on the at least one first packet 321.

For example, the processor 210 may receive data 130-1 through the communication circuit 220, according to the synchronization to the BIS. The processor 210 may discard the data 130-1 to defer outputting the audio before the timing 401. For example, the processor 210 may discard the data 130-1 instead of rendering the data 130-1.

For example, the processor 210 may receive data 1101 for the BIS broadcasted from the fourth electronic device 104 through the communication circuit 220, according to the synchronization to the BIS. The processor 210 may discard the data 1101 to defer outputting the audio before the timing 401.

For example, the processor 210 may receive at least one packet 1121 according to a periodic advertisement of the fourth electronic device 104. For example, the processor 210 may receive the data 1102 for the BIS broadcasted from the fourth electronic device 104 through the communication circuit 220, based on the at least one packet 1121. The processor 210 may discard the data 1102 to defer outputting the audio before the timing 401.

For example, the processor 210 may receive data 1103 for the BIS broadcasted from the fourth electronic device 104 through the communication circuit 220, according to the synchronization to the BIS. The processor 210 may discard the data 1103 to defer outputting the audio before the timing 401.

For example, the processor 210 may receive at least one second packet 323 according to a second periodic advertisement 303 of the fourth electronic device 104. For example, the processor 210 may receive data 130-2, based on the at least one second packet 323. For example, the processor 210 may output the audio with the reference volume 333 from a start timing 401 of rendering of the data 130-2.

For example, the processor 210 may defer outputting the audio, by discarding the data 130-1, the data 1101, the data 1102, and the data 1103. For example, the processor 210 may defer outputting the audio with the reference volume 333 by deferring outputting the audio.

Referring to FIG. 12, the processor 210 of the first electronic device 101 may receive the information 311 from the third electronic device 103. The processor 210 may receive at least one first packet 321 according to a first periodic advertisement (e.g., the first periodic advertisement 301 of FIG. 3) of the fourth electronic device 104, based on the information 311. For example, the processor 210 may bypass, defer, refrain from, block, or skip executing synchronization to the BIS from the fourth electronic device 104 even when the processor 210 receives the at least one first packet 321.

For example, the processor 210 may control or cause the communication circuit 220 so that the data 130-1 is not received based on the at least one first packet 321. For example, the processor 210 may control or cause the communication circuit 220 so that the data 1201 for the BIS broadcasted from the fourth electronic device 104 after the data 130-1 is broadcasted is not received.

For example, the processor 210 may defer the synchronization to the BIS until a timing 1290, but the processor 210 may maintain receiving at least one packet according to a periodic advertisement of the fourth electronic device 104.

For example, the processor 210 may receive at least one packet 1221 according to a periodic advertisement of the fourth electronic device 104 through the communication circuit 220. For example, the processor 210 may defer a synchronization to the BIS until a timing 1290, even when the processor 210 receives the at least one packet 1221. For example, the processor 210 may control or cause the communication circuit 220 so that data 1202 for the BIS broadcasted from the fourth electronic device 104 is not received based on the at least one packet 1221. For example, the processor 210 may control or cause the communication circuit 220 so that data 1203 for the BIS broadcasted from the fourth electronic device 104 after the data 1202 is broadcasted is not received.

For example, the processor 210 may receive at least one packet 1222 according to a periodic advertisement of the fourth electronic device 104 through the communication circuit 220. For example, the processor 210 may defer a synchronization to the BIS until a timing 1290, even when the processor 210 receives the at least one packet 1222. For example, the processor 210 may control or cause the communication circuit 220 so that data 1204 for the BIS broadcasted from the fourth electronic device 104 is not received based on the at least one packet 1222. For example, the processor 210 may control or cause the communication circuit 220 so that data 1205 for the BIS broadcasted from the fourth electronic device 104 after the data 1204 is broadcasted is not received.

For example, the processor 210 may receive at least one second packet 323 according to a second periodic advertisement (e.g., the first periodic advertisement 303 of FIG. 3) of the fourth electronic device 104 through the communication circuit 220. For example, the processor 210 may synchronize to the BIS at the timing 1290, based on the at least one second packet 323. For example, the processor 210 may synchronize to the BIS at the timing 1290 to output the audio with the reference volume 333 from the timing 401. For example, the processor 210 may receive data 130-2 according to the synchronization. For example, the processor 210 may output the audio with the reference volume 333, by starting rendering of the data 130-2 from the timing 401.

For example, the processor 210 may defer outputting the audio with the reference volume 333 until a start of rendering of the data 130-2, by bypassing or deferring synchronization to the BIS from the fourth electronic device 104 until the data 130-2 indicated by the at least one second packet 323 is received (e.g., the timing 1290), after the synchronization to the BIS.

For example, the synchronization of the first electronic device 101 to the BIS may be ceased. The ceasing may be caused by a user input with respect to the third electronic device 103 or may be caused by a user input with respect to the first electronic device 101. For example, since the second electronic device 102 is paired with the first electronic device 101, the second electronic device 102 may cease the synchronization together with the first electronic device 101.

For example, the ceased synchronization may be resumed based on a request (or command) from the third electronic device 103. For example, the processor 210 may resume the synchronization to the BIS based on the request. For example, since the second electronic device 102 is paired with the first electronic device 101, the second electronic device 102 may execute operations for resuming the synchronization while operations for resuming the synchronization are executed in the first electronic device 101.

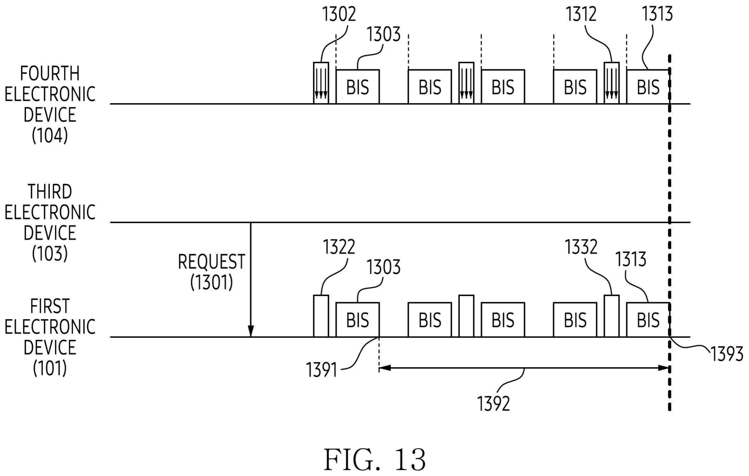

As a non-limiting example, since a timing at which the second electronic device 102 resumes the synchronization may be different from a timing at which the first electronic device 101 resumes the synchronization, the processor 210 of the first electronic device 101 may execute operations for synchronizing audio outputted from the first electronic device 101 with audio outputted from the second electronic device 102 according to resuming of the synchronization, after the resuming of the synchronization. The operations executed by the processor 210 are exemplified in descriptions of FIG. 13.

FIG. 13 illustrates an exemplary method for deferring outputting audio with a reference volume according to resumption of synchronization to a BIS.

Referring to FIG. 13, the processor 210 of the first electronic device 101 may receive, from the third electronic device 103 through the communication circuit 220, a request 1301 (e.g., a modify source) to resume synchronization to the BIS from the fourth electronic device 104. As a non-limiting example, the request 1301 may include information on a periodic advertisement of the fourth electronic device 104, such as the information 311. For example, when scheduling of the periodic advertisement of the fourth electronic device 104 is changed, the request 1301 may include the information.

For example, the processor 210 may receive, through the communication circuit 220, at least one packet 1322 advertised according to a periodic advertisement 1302 of the fourth electronic device 104, in response to the request 1301. The processor 210 may synchronize to the BIS indicated by the at least one packet 1322. For example, the processor 210 may receive, through the communication circuit 220, data 1303 broadcasted from the fourth electronic device 104 by synchronizing to the BIS. For example, the processor 210 may defer setting a volume of audio of the BIS outputted based on the data 1303 to the reference volume 333 to synchronize audio outputted from the second electronic device 102 with audio outputted from the first electronic device 101.

For example, the processor 210 may control the speaker 230 to output the audio with the reference volume 333 in response to a second timing 1393 after a designated time 1392 from a first timing 1391 of rendering according to synchronization to the BIS executed based on the at least one packet 1322.

For example, the processor 210 may defer outputting the audio with the reference volume 333 until a start of rendering of data 1313 for the BIS indicated by at least one packet 1332 advertised according to a periodic advertisement 1312 of the fourth electronic device 104.

As a non-limiting example, the processor 210 may defer outputting the audio with the reference volume 333 until a start of rendering of the data 1313, by executing a portion of the operations exemplified in the descriptions of FIGS. 7 to 12.

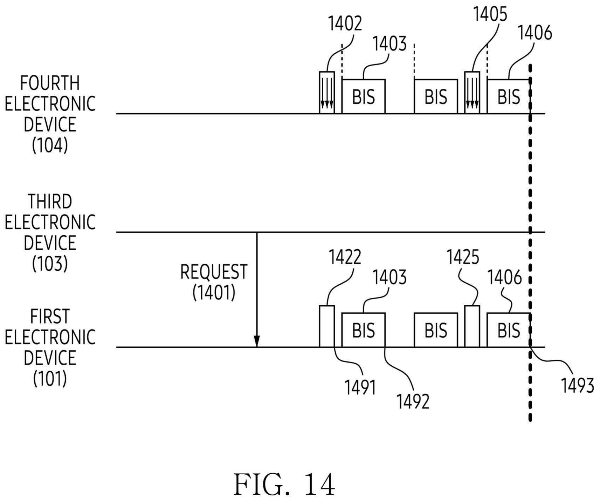

For example, the processor 210 may control the speaker 230 to fade out to another reference volume (e.g., a minimum volume) in the audio, when the synchronization to the BIS is terminated. Controlling the speaker 230 when the synchronization to the BIS is terminated is exemplified in descriptions of FIG. 14.

FIG. 14 illustrates an exemplary method for controlling output of audio according to termination of synchronization to a BIS.

Referring to FIG. 14, the processor 210 of the first electronic device 101 may receive, from the third electronic device 103 through the communication circuit 220, a request 1401 (e.g., a modify source) to terminate synchronization to the BIS from the fourth electronic device 104. For example, terminating outputting the audio (immediately) in response to the request 1401 may cause discomfort to a user. For example, ceasing to output the audio (immediately) in response to the request 1401 may cause a timing at which audio outputted from the second electronic device 102 is ceased different from a timing at which audio outputted from the first electronic device 101 is ceased.

For example, the processor 210 may decrease a volume of the audio of the BIS from a reception timing 1491 of at least one packet 1422 advertised according to a periodic advertisement 1402 of the fourth electronic device 104 that is executed initially after the request 1401 is received. In another example, the processor 210 may decrease a volume of the audio from a start timing 1492 of rendering of data 1403 indicated by the at least one packet 1422.

For example, the processor 210 may control the speaker 230 to fade out to the other reference volume in the audio from the timing 1491 or the timing 1492.

For example, the processor 210 may set an end timing of fade-out of the audio. For example, the processor 210 may set a start timing 1493 of rendering of data 1406 for the BIS that is indicated by at least one packet 1425 advertised according to a periodic advertisement 1405 of the fourth electronic device 104 following the periodic advertisement 1402 as the end timing.

For example, the processor 210 may control the speaker 230 to fade out to the other reference volume in the audio during a time interval between the timing 1491 (or the timing 1492) and the timing 1493. For example, the processor 210 may control the speaker 230 to continuously fade out (e.g., in a form of a left-right reversal of FIG. 8) to the other reference volume in the audio during the time interval. For example, the processor 210 may control the speaker 230 to discontinuously fade out (e.g., in a form of a left-right reversal of FIG. 9) to the other reference volume in the audio during the time interval.

FIG. 15 is a block diagram illustrating an electronic device 1501 in a network environment 1500 according to various embodiments. Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, an HDMI connector, a USB connector, an SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth^{™}, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 1564dB or less) for implementing mMTC, or U-plane latency (e.g., 0.5ms or less for each of downlink (DL) and uplink (UL), or a round trip of 15ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

As described above, an electronic device (e.g., first electronic device 101) may comprise a communication circuit (e.g., the first electronic device 101) for Bluetooth low energy (BLE), a speaker (e.g., the speaker 230), and at least one processor (e.g., the processor 210). The at least one processor may be configured to receive information for a first periodic advertisement of a second external electronic device (e.g., the fourth electronic device 104), through the communication circuit from a first external electronic device (e.g., the third electronic device 104), receive, based on the information, at least one first packet advertised from the second external electronic device according to the first periodic advertisement, through the communication circuit, after synchronizing to broadcast isochronous stream (BIS) from the second external electronic device based on the at least one first packet, defer to output audio of the BIS with a reference volume until start of rendering of data for the BIS that is indicated by at least one second packet advertised from the second external electronic device according to a second periodic advertisement of the second external electronic device, and control the speaker to output the audio with the reference volume based on the rendering of the data received from the second external electronic device.

For example, the second periodic advertisement may be a periodic advertisement of the second external electronic device before occurrence of timeout of the synchronization to the BIS.

For example, the at least one processor may be configured to receive, through the communication circuit, data for the BIS that is indicated by the at least one first packet from the second external electronic device, and control the speaker to fade into the reference volume in the audio during time interval from a start timing of rendering of the data for the BIS indicated by the at least one first packet to a start timing of the rendering of the data for the BIS indicated by the at least one second packet.

For example, the at least one processor may be configured to control the speaker to continuously fade into the reference volume in the audio.

For example, the at least one processor may be configured to control the speaker to discontinuously fade into the reference volume in the audio.

For example, the at least one processor may be configured to defer to output the audio, before outputting the audio with the reference volume based on the data.

For example, the at least one processor may be configured to defer to output the audio with the reference volume until the start of the rendering of the data to synchronize with a volume of audio of BIS from the second external electronic device, outputted from another electronic device that is paired with the electronic device.

For example, the at least one processor may be configured to set timing at which the audio is to be outputted with the reference volume, in response to the reception of the information, and defer to output the audio with the reference volume, based on the set timing.

For example, the setting of the timing may be executed based on at least one of quality of communication between the electronic device and the second external electronic device or quality of communication between the electronic device and the first external electronic device.

For example, the at least one processor may be configured to set timing at which the audio is to be outputted with the reference volume in response to the information, before the at least one first packet is received, and defer to output the audio with the reference volume until the state of the rendering of the data, according to the set timing.

For example, the at least one processor may be configured to transmit first information on success of the synchronization to the BIS, to the first external electronic device through the communication circuit, in response to synchronizing to the BIS based on the at least one first packet, receive second information on timing at which the audio is to be outputted with the reference volume through the communication circuit from the first external electronic device, and defer to output the audio with the reference volume until the start of the rendering of the data, based on the second information.

For example, the at least one processor may be configured to establish connection with another electronic device paired with the electronic device by using the communication circuit, receive first information informing that the other electronic device is successful in synchronization to BIS from the second external electronic device, by using the communication circuit through the connection from the other electronic device, transmit, in response to synchronizing to the BIS based on the at least one first packet, second information on success of the synchronization to the BIS, to the other electronic device through the connection, by using the communication circuit, set timing at which the audio is to be outputted with the reference volume, based on the synchronization to the BIS and the reception of the first information, and defer to output the audio with the reference volume until the start of the rendering of the data, according to the set timing.

For example, the at least one processor may be configured to establish connection with another electronic device paired with the electronic device by using the communication circuit, transmit, in response to synchronizing to the BIS based on the at least one first packet, first information on success of the synchronization to the BIS to the other electronic device through the connection, after the first information is transmitted, defer to output the audio with the reference volume until second information informing that the other electronic device is successful in synchronization to BIS from the second external electronic device is received from the other electronic device, receive the second information through the connection from the other electronic device by using the communication circuit, set timing at which the audio is to be outputted with the reference volume, based on the reception of the second information, and defer to output the audio with the reference volume until the start of the rendering of the data, according to the set timing.

For example, the at least one processor may be configured to defer outputting the audio with the reference volume until the start of the rendering of the data for the BIS indicated by the at least one second packet, by discarding data for the BIS received from the second external electronic device until the data for the BIS indicated by the at least one second packet is received, after the synchronization to the BIS.

For example, the at least one processor may be configured to defer outputting the audio with the reference volume until the start of the rendering of the data for the BIS indicated by the at least one second packet, by bypassing or deferring synchronization to the BIS from the second external electronic device until the data for the BIS indicated by the at least one second packet is received, after the synchronization to the BIS.

For example, the at least one processor may be configured to receive, from the first external electronic device, a first request to cease synchronization to the BIS through the communication circuit, cease the synchronization to the BIS in response to the first request, receive, from the first external electronic device, a second request for resuming synchronization to the BIS through the communication circuit after the synchronization to the BIS is ceased, receive, from the second external electronic device, at least one third packet advertised from the second external electronic device according to a third periodic advertisement of the second external electronic device through the communication circuit in response to the second request, and control the speaker to output the audio with the reference volume in response to a second timing after a designated time from a first timing of rendering according to synchronization to the BIS executed based on the at least one third packet.

For example, the at least one processor may be configured to control the speaker to fade into the reference volume in the audio during a time interval from the first timing to the second timing.

For example, the at least one processor may be configured to receive, from the first external electronic device, a request to terminate synchronization to the BIS through the communication circuit, and control the speaker to fade-out to another reference volume lower than the reference volume in the audio during a time interval from a first timing of rendering of data for the BIS executed immediately after the reception of the request to a second timing of terminating synchronization to the BIS according to the request. For example, the second timing may be a timing after a designated time from the first timing.

As described above, a method may be executed in an electronic device with a communication circuit for Bluetooth low energy (BLE) and a speaker. The method may comprise receiving information for a first periodic advertisement of a second external electronic device, through the communication circuit from a first external electronic device, receiving, based on the information, at least one first packet advertised according to the first periodic advertisement, through the communication circuit, after synchronizing to broadcast isochronous stream (BIS) from the second external electronic device based on the at least one first packet, deferring to output audio of the BIS with a reference volume until start of rendering of data for the BIS that is indicated by at least one second packet advertised according to a second periodic advertisement of the second external electronic device, and controlling the speaker to output the audio with the reference volume based on the rendering of the data received from the second external electronic device.

As described above, a non-transitory computer readable storage medium may store one or more programs. The one or more programs may comprise instructions to, when executed by an electronic device with a communication circuit for Bluetooth low energy (BLE) and a speaker, cause the electronic device to receive information for a first periodic advertisement of a second external electronic device, through the communication circuit from a first external electronic device, receive, based on the information, at least one first packet advertised from the second external electronic device according to the first periodic advertisement, through the communication circuit, after synchronizing to broadcast isochronous stream (BIS) from the second external electronic device based on the at least one first packet, defer to output audio of the BIS with a reference volume until start of rendering of data for the BIS that is indicated by at least one second packet advertised from the second external electronic device according to a second periodic advertisement of the second external electronic device, and control the speaker to output the audio with the reference volume based on the rendering of the data received from the second external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
communication circuitry for Bluetooth low energy (BLE);
a speaker;
at least one processor comprising processing circuitry; and
memory comprising one or more storage media storing instructions,
wherein the instructions, when executed by the at least one processor individually or collectively, cause the electronic device to:
receive information for a first periodic advertisement of a second external electronic device, through the communication circuitry from a first external electronic device;
receive, based on the information, at least one first packet advertised from the second external electronic device according to the first periodic advertisement, through the communication circuit;
after synchronizing to broadcast isochronous stream (BIS) from the second external electronic device based on the at least one first packet, defer to output audio of the BIS with a reference volume until start of rendering of data for the BIS that is indicated by at least one second packet advertised from the second external electronic device according to a second periodic advertisement of the second external electronic device; and
control the speaker to output the audio with the reference volume based on the rendering of the data received from the second external electronic device.

2. The electronic device of claim 1, wherein the second periodic advertisement is a periodic advertisement of the second external electronic device before occurrence of timeout of the synchronization to the BIS.

3. The electronic device of claim 1, wherein the instructions, when executed by the at least one processor individually or collectively, cause the electronic device to:
receive, through the communication circuit, data for the BIS that is indicated by the at least one first packet from the second external electronic device; and
control the speaker to fade into the reference volume in the audio during time interval from a start timing of rendering of the data for the BIS indicated by the at least one first packet to a start timing of the rendering of the data for the BIS indicated by the at least one second packet.

4. The electronic device of claim 3, wherein the instructions, when executed by the at least one processor individually or collectively, cause the electronic device to control the speaker to continuously fade into the reference volume in the audio.

5. The electronic device of claim 3, wherein the instructions, when executed by the at least one processor individually or collectively, cause the electronic device to control the speaker to discontinuously fade into the reference volume in the audio.

6. The electronic device of claim 1, wherein the instructions, when executed by the at least one processor individually or collectively, cause the electronic device to defer to output the audio, before outputting the audio with the reference volume based on the data.

7. The electronic device of claim 1, wherein the instructions, when executed by the at least one processor individually or collectively, cause the electronic device to defer to output the audio with the reference volume until the start of the rendering of the data to synchronize with a volume of audio of BIS from the second external electronic device, outputted from another electronic device that is paired with the electronic device.

8. The electronic device of claim 1, wherein the instructions, when executed by the at least one processor individually or collectively, cause the electronic device to:
set timing at which the audio is to be outputted with the reference volume, in response to the reception of the information; and
defer to output the audio with the reference volume, based on the set timing.

9. The electronic device of claim 8, wherein the setting of the timing is executed based on at least one of quality of communication between the electronic device and the second external electronic device or quality of communication between the electronic device and the first external electronic device.

10. The electronic device of claim 1, wherein the instructions, when executed by the at least one processor individually or collectively, cause the electronic device to:
set timing at which the audio is to be outputted with the reference volume in response to the information, before the at least one first packet is received; and
defer to output the audio with the reference volume until the state of the rendering of the data, according to the set timing.

11. The electronic device of claim 1, wherein the instructions, when executed by the at least one processor individually or collectively, cause the electronic device to:
transmit first information on success of the synchronization to the BIS, to the first external electronic device through the communication circuit, in response to synchronizing to the BIS based on the at least one first packet;
receive second information on timing at which the audio is to be outputted with the reference volume through the communication circuitry from the first external electronic device; and
defer to output the audio with the reference volume until the start of the rendering of the data, based on the second information.

12. The electronic device of claim 1, wherein the instructions, when executed by the at least one processor individually or collectively, cause the electronic device to:
establish connection with another electronic device paired with the electronic device by using the communication circuit;
receive first information informing that the other electronic device is successful in synchronization to BIS from the second external electronic device, by using the communication circuitry through the connection from the other electronic device;
transmit, in response to synchronizing to the BIS based on the at least one first packet, second information on success of the synchronization to the BIS, to the other electronic device through the connection, by using the communication circuit;
set timing at which the audio is to be outputted with the reference volume, based on the synchronization to the BIS and the reception of the first information; and
defer to output the audio with the reference volume until the start of the rendering of the data, according to the set timing.

13. The electronic device of claim 1, wherein the instructions, when executed by the at least one processor individually or collectively, cause the electronic device to:
establish connection with another electronic device paired with the electronic device by using the communication circuit;
transmit, in response to synchronizing to the BIS based on the at least one first packet, first information on success of the synchronization to the BIS to the other electronic device through the connection;
after the first information is transmitted, defer to output the audio with the reference volume until second information informing that the other electronic device is successful in synchronization to BIS from the second external electronic device is received from the other electronic device;
receive the second information through the connection from the other electronic device by using the communication circuit;
set timing at which the audio is to be outputted with the reference volume, based on the reception of the second information; and
defer to output the audio with the reference volume until the start of the rendering of the data, according to the set timing.

14. A method executed in an electronic device with communication circuitry for Bluetooth low energy (BLE) and a speaker, the method comprising:
receiving information for a first periodic advertisement of a second external electronic device, through the communication circuitry from a first external electronic device;
receiving, based on the information, at least one first packet advertised according to the first periodic advertisement, through the communication circuit;
after synchronizing to broadcast isochronous stream (BIS) from the second external electronic device based on the at least one first packet, deferring to output audio of the BIS with a reference volume until start of rendering of data for the BIS that is indicated by at least one second packet advertised according to a second periodic advertisement of the second external electronic device; and
controlling the speaker to output the audio with the reference volume based on the rendering of the data received from the second external electronic device.

15. A non-transitory computer readable storage medium storing one or more programs, the one or more programs comprising instructions to, when executed by an electronic device with communication circuitry for Bluetooth low energy (BLE) and a speaker, cause the electronic device to:
receive information for a first periodic advertisement of a second external electronic device, through the communication circuitry from a first external electronic device;
receive, based on the information, at least one first packet advertised from the second external electronic device according to the first periodic advertisement, through the communication circuit;
after synchronizing to broadcast isochronous stream (BIS) from the second external electronic device based on the at least one first packet, defer to output audio of the BIS with a reference volume until start of rendering of data for the BIS that is indicated by at least one second packet advertised from the second external electronic device according to a second periodic advertisement of the second external electronic device; and
control the speaker to output the audio with the reference volume based on the rendering of the data received from the second external electronic device.
